# EUROPÄISCHE PATENTSCHRIFT

(11) **EP 0 585 517 B1**
(45) Veröffentlichungstag und Bekanntmachung des Hinweises auf die Patenterteilung: **10.01.1996**
(21) Anmeldenummer: 93102765.0
(22) Anmeldetag: 22.02.1993
(51) Int. Cl.: F16F 13/00

(54) **Hydraulisch dämpfendes Gummilager**
Hydraulically-damped elastomeric mounting
Support élastique à amortissement hydraulique

(30) Priorität: 29.08.1992 DE 4228842
(43) Veröffentlichungstag der Anmeldung: 09.03.1994
(73) Patentinhaber: Firma Carl Freudenberg, D-69469 Weinheim (DE)
(72) Erfinder: Rudolph, Axel, W-6140 Bensheim (DE)

(56) Entgegenhaltungen:
- DE-A- 3 820 805
- US-A- 4 899 997
- PATENT ABSTRACTS OF JAPAN vol. 17, no. 263 (M-1415)24. Mai 1993 & JP-A-05 001 745 (TOKAI RUBBER IND LTD) 8. Januar 1993
- PATENT ABSTRACTS OF JAPAN vol. 12, no. 182 (M-702)(3029) 27. Mai 1988 & JP-A-62 292 941 (MARUGO RUBBER KOGYO LTD) 19. Dezember 1987

## Beschreibung

Die Erfindung betrifft ein hydraulisch dämpfendes Gummilager, umfassend ein Innenrohr und ein das Innenrohr mit radialem Abstand umschließendes Außenrohr, die durch ein gummielastisches Federelement miteinander verbunden sind, wobei zumindest zwei flüssigkeitsgefüllte Arbeitsräume durch eine schwingfähige Trennwand voneinander getrennt und durch zumindest eine Verbindungsöffnung miteinander verbunden sind, und wobei von den Arbeitsräumen zumindest ein luftgefüllter Hohlraum abgetrennt ist, der von blähelastischen Wänden begrenzt ist, die in zumindest einem Teilbereich eine in Richtung der Atmosphäre offene Ausnehmung aufweisen.

Ein solches Gummilager ist aus der DE-OS 3 820 805 bekannt. Das vorbekannte Gummilager ist insbesondere zur Lagerung eines Kraftfahrzeugmotors in einer Kraftfahrzeugkarosserie vorgesehen, wobei auf einander gegenüberliegenden Seiten des Innenrohres einerseits ein mit der Umgebungsluft in Verbindung stehender Hohlraum und andererseits zwei über eine Dämpfungsöffnung flüssigkeitsleitend miteinander verbundene Arbeitskammern gezeigt sind. Eine radial sich erstreckende Öffnung im Aüßenrohr stellt die Verbindung des Hohlraumes mit der Atmosphäre her. Die Arbeitskammern sind zur Isolierung hochfrequenter Schwingungen durch eine bewegliche Trennwand voneinander getrennt. Dabei ist allerdings zu beachten, daß die Herstellbarkeit des vorbekannten Gummilagers sowohl in fertigungstechnischer als auch wirtschaftlicher Hinsicht wenig befriedigend ist.

Der Erfindung liegt die Aufgabe zugrunde, ein Gummilager der vorbekannten Art derart weiterzuentwickeln, daß sich eine vereinfachte Herstellbarkeit insbesondere im Bereich der Arbeitskammern ergibt, daß das Lager in wirtschaftlicher und fertigungstechnischer Hinsicht besser herstellbar ist und daß eine breitbandigere Isolierung höherfrequenter Schwingungen die Gebrauchseigenschaften verbessert.

Diese Aufgabe wird erfindungsgemäß mit den Merkmalen von Anspruch 1 gelöst. Auf vorteilhafte Ausgestaltungen nehmen die Unteransprüche Bezug.

Zur Erzielung einer breitbandigen Isolierung höherfrequenter Schwingungen mit kleinen Amplituden und eines einfacheren Aufbaus des Gummilagers ist es vorgesehen, daß die Ausnehmung in axialer Richtung zur Atmosphäre offen ist. Bei Einleitung tieffrequenter Schwingungen mit großen Schwingungsamplituden erfolgt zur Schwingungsdämpfung eine Flüssigkeitsverlagerung zwischen den beiden Arbeitskammern durch die Verbindungsöffnung. Höherfrequente Schwingungen mit kleinen Amplituden werden durch ein Auslenken der zwischen den Arbeitsräumen befindlichen Trennwand isoliert, wobei der blähweiche, gasgefüllte Hohlraum die Differezvolumina mit einem vernachlässigbar kleinen Widerstand, praktisch drucklos, aufnimmt.

Hinsichtlich einer möglichst einfachen und kostengünstigen Fertigung kann das Federelement als einstückiges Vulkanisationsteil ausgebildet sein, das das Innenrohr umfangsseitig umschließt und mit dem Außenrohr die Verbindungsöffnung begrenzt.

Gemäß einer besonders einfachen und teilarmen Ausgestaltung des Gummilagers können die den Hohlraum begrenzenden, blähelastischen Wände des Hohlraums und die Trennwand durch das einstückige Vulkanisationsteil gebildet sein.

Das erfindungsgemäße Gummilager umfaßt dann nur drei Einzelteile.

Das Innenrohr und das Federelement, das als Vulkanisationsteil ausgebildet ist und sämtliche funktionswesentlichen Bestandteile enthält, sind einander elastisch nachgiebig zugeordnet und können in axialer Richtung in das Außenrohr eingeschoben werden. Anschließend werden die Arbeitskammern mit Fluid befüllt und das Außenrohr wird in Richtung des Innenrohres gebördelt. Die Verwendung beispielsweise separat herzustellender Verbindungsöffnungen zwischen den beiden Arbeitsräumen ist dadurch entbehrlich.

Nach einer anderen Ausgestaltung kann das Federelement eine einstückig angeformte Aufnahme für eine einschiebbare Trennwand aufweisen, die während der bestimmungsgemäßen Verwendung durch eine einstückig mit der Aufnahme verbundene Verliersicherung positioniert ist. Hierbei ist von Vorteil, daß die Trennwand besonders einfach in das Gummilager montiert werden kann und im vormontierten Zustand, bevor das Federelement und das Innenrohr in das Außenrohr eingeschoben werden, zuverlässig in ihrer Lage gehalten wird. Die Verliersicherung kann beispielsweise durch einen widerhakenförmigen Vorsprung des Federelementes gebildet sein, hinter dem die Trennwand bei ihrer Montage in die Aufnahme einschnappbar ist.

Die Trennwand, die membranartig ausgebildet sein kann, kann im Bereich ihrer umfangsseitigen Begrenzung durch die Aufnahme mit einem Abstand umschlossen sein, wobei die Aufnahme und/oder die Trennwand im Bereich ihrer Anschlagsflächen mit Anschlagpuffern zur Verhinderung von Anschlaggeräuschen versehen sein können. Bei der Einleitung hochfrequenter Schwingungen kleiner Amplituden bewegt sich die Trennwand in ihrem Spiel, so daß keine dynamische Verhärtung auftritt. Werden jedoch zum Beispiel niederfrequente Schwingungen mit großen Amplituden eingeleitet, so wird, nachdem das Spiel der Trennwand innerhalb der Aufnahme überbrückt ist, Fluid durch die Verbindungsöffungen gefördert und eine gute Dämpfung der Schwingungen erreicht. Die Anordnung der Trennwand innerhalb des Federelementes kann unterschiedlich erfolgen und richtet sich im wesentlichen nach den jeweiligen Gegebenheiten des Anwendungsfalles.

Nach einer anderen Ausgestaltung kann es vorgesehen sein, daß die Trennwand im Bereich ihrer umfangsseitigen Begrenzung in die Aufnahme eingespannt ist und aus einem membranartigen, gummielastischen Werkstoff besteht. Hierbei ist allerdings zu beachten, daß zwar Anschlaggeräusche vollständig ausgeschlossen sind, daß die Montage der Trennwand in der Aufnahme allerdings schwieriger ist, als wenn die Aufnahme die Trennwand mit Abstand umschließt.

Die Trennwand kann beispielsweise aus einer zwischen zwei unnachgiebigen Lochscheiben angeordneten Membran aus gummielastischem Werkstoff bestehen, wobei die Lochscheiben der Membran in Schwingungsrichtung mit Abstand benachbart zugeordnet sind. Diese Ausgestaltung ist im Hinblick auf die Entkoppelung hochfrequenter Schwingungen von hervorzuhebender Bedeutung. Zusätzlich kann die Membran beispielsweise mit zumindest einer Durchbrechung versehen sein, so daß neben der Verbindungsöffnung zwischen den beiden Arbeitskammern eine weitere flüssigkeitsleitende Verbindung besteht. In Abhängigkeit von den jeweiligen Gegebenheiten des Anwendungsfalles kann die zusätzliche, flüssigkeitsleitende Verbindung zwischen den beiden Arbeitskammern mit einem Ventil versehen sein, so daß beispielsweise eine unterschiedliche Dämpfungscharakteristik bei Belastung des Lager auf Zug und Druck erreicht werden kann.

Das Federelement kann auf der dem angrenzenden zweiten Arbeitsraum zugewandten Seite zumindest eine gasgefüllte Ausnehmung aufweisen, die sich im wesentlichen parallel zu der Oberfläche des Federelements erstreckt, der das Innen- und das Außenrohr miteinander verbindet. Die zusätzlich zu dem mit der Atmosphäre in Verbindung stehenden Hohlraum vorgesehene Ausnehmung verhindert bei der Einleitung stoßartiger Belastungen sehr großer Amplituden eine übermäßige Verhärtung des Bauteils. In Abhängigkeit von der Materialstärke des Federelements, die sich zwischen der Ausnehmung und dem daran ausgrenzenden, flüssigkeitsgefüllten Arbeitsraum befindet, können in Verbindung mit dieser Kammerwand Stöße weich abgefangen werden.

Zur Begrenzung radialer Auslenkbewegungen des Innenrohres in Richtung der von den Arbeitskammern abgewandten Seite kann ein zweiter Hohlraum vorgesehen sein, in dem ein einstückig mit dem Federelement ausgebildeter Anschlagpuffer vorgesehen ist, der in radialer Richtung vom Außenrohr in Richtung des Innenrohres weist. Derartige Anschlagpuffer können beispielsweise mit einer zusätzlichen Endlagendämpfung in Form einer flüssigkeitsgefüllten Ausnehmung unter dem Anschlagpuffer kombiniert sein. Bei flüssigkeitsleitender Verbindung der Ausnehmung mit zumindest einer der beiden Arbeitsräume ergeben sich zwei Dämpfungs-maxima, was in manchen Anwendungsfällen von Vorteil ist.

Hinsichtlich einer besonders einfachen Montage ist es vorgesehen, daß das Innenrohr, das Federelement und die Trennwand ein vormontierbares Einschubteil bildet, das in axialer Richtung in das Außenrohr einführbar und nach der Befüllung der Arbeitskammern mit Dämpfungsflüssigkeit in diesem festlegbar ist. Die Verbindung des Einschubteils mit dem Außenrohr kann beispielsweise durch ein Umbördeln des Außenrohrs in radialer Richtung nach innen erfolgen, wodurch gleichzeitig eine zuverlässige Abdichtung der Arbeitskammern und der Verbindungsöffnung im Außenrohr bewirkt wird.

In Abhängigkeit von den jeweiligen Gegebenheiten des Anwendungsfalles kann die Trennwand von ventilartigen Durchbrechungen durchdrungen sein. Die Durchbrechungen können beispielsweise durch flatterventilartige Laschen innerhalb einer gummielastischen Membran gebildet sein, die den Flüssigkeitsaustausch zwischen den zwei einander benachbarten Arbeitskammern bei Einleitung tieffrequenter Schwingungen großer Amplituden erleichtern. Die ventilartigen Durchbrechungen in der Trennwand können nach einer anderen Ausgestaltung derartig ausgebildet sein, daß sie beispielsweise den Flüssigkeitsdurchtritt nur in einer Richtung ermöglichen. Unterschiedlich ausgebildete Zug-/Druckstufen zur Dämpfung tieffrequenter Schwingungen können dadurch erreicht werden, ebenso beispielsweise durch Ventile, die innerhalb der Verbindungsöffnung zwischen den Arbeitskammern angeordnet sind.

Ein Ausführungsbeispiel des erfindungsgemäßen Gummilagers ist in den als Anlage beigefügten Zeichnungen gezeigt und wird nachfolgend näher beschrieben.

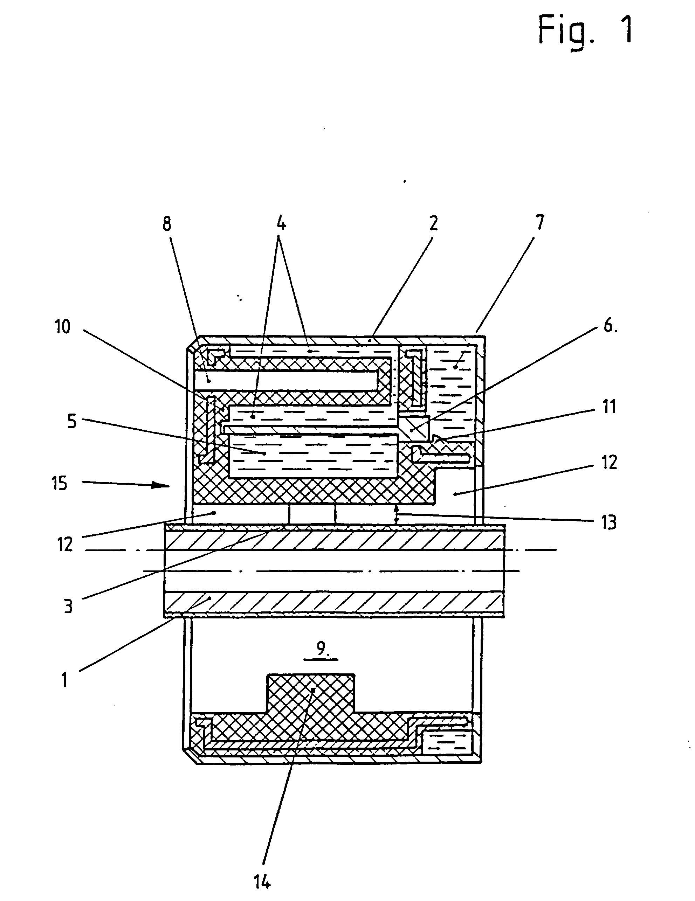

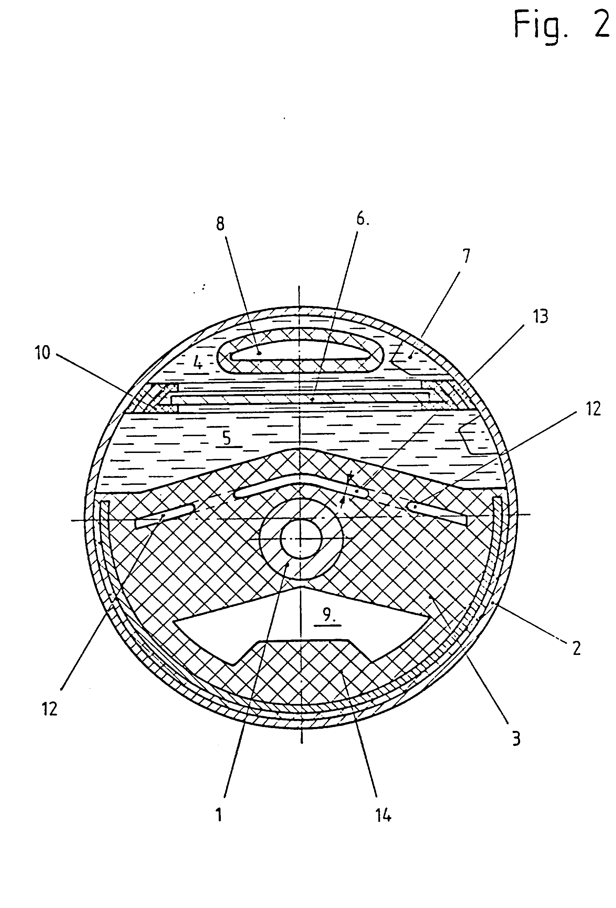

Es zeigen: Figur 1 ein Ausführungsbeispiel eines Gummilagers in längsgeschnittener Darstellung und Figur 2 das in Figur 1 gezeigte Gummilager in quergeschnittener Darstellung.

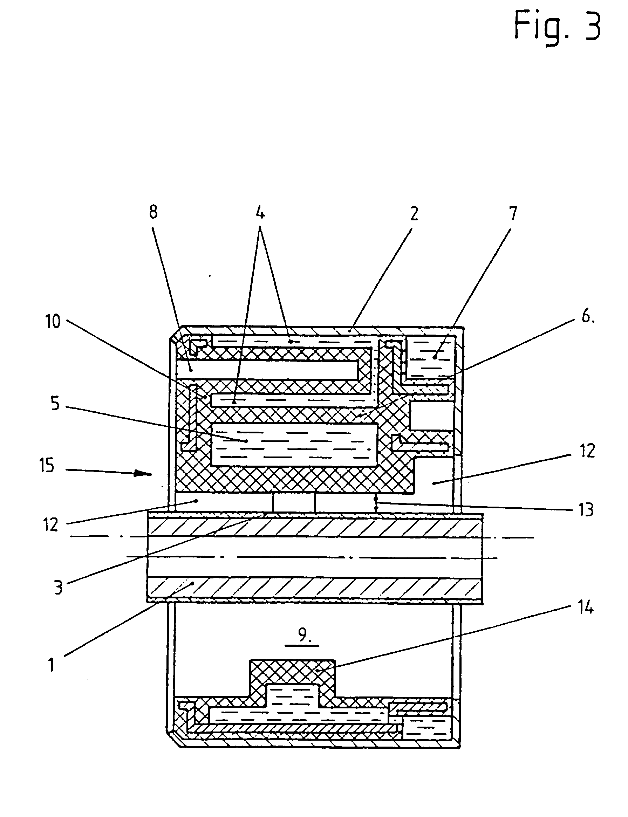

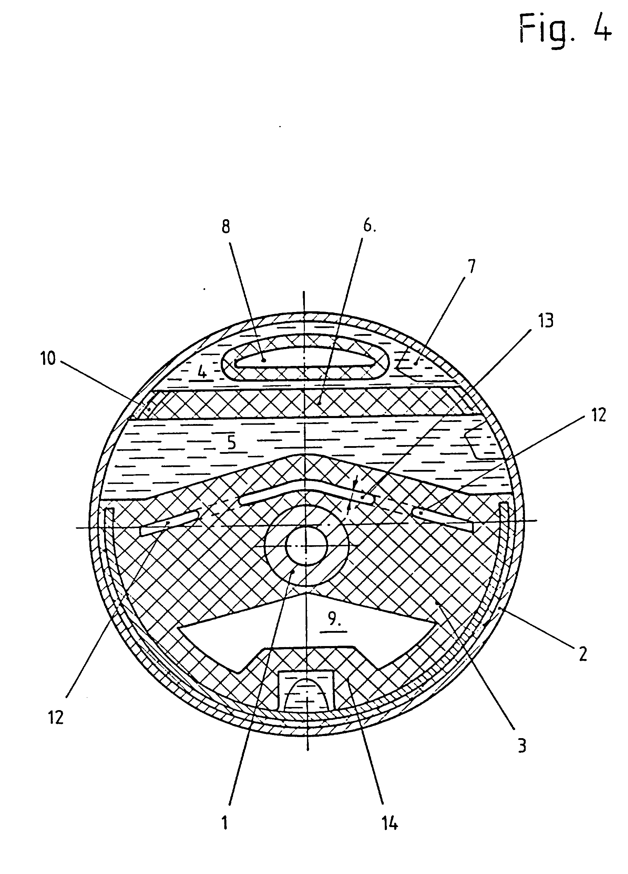

In den Figuren 3 und 4 ist ein Gummilager ähnlich dem Ausführungsbeispiel aus den Figuren 1 und 2 dargestellt, wobei der Aufbau durch die einstückige Ausgestaltung des Federelements mit der Trennwand weiter vereinfacht ist.

In den Figuren 1 und 2 ist ein Ausführungsbeispiel eines erfindungsgemäßen Gummilagers gezeigt, das aus nur vier Teilen besteht. Das Innenrohr 1 ist von einem gummielastischen Federelement 3 umschlossen, wobei sich das Federelement 3 radial außenseitig in einem Außenrohr 2 abstützt. Das Federelement 3 begrenzt in radialer Richtung einerseits des Innenrohres 1 nur zwei flüssigkeitsgefüllte Arbeitsräume 4,5, die durch eine schwingfähige Trennwand 6 voneinander getrennt und durch eine kanalartig ausgebildete Verbindungsöffnung 7 flüssigkeitsleitend miteinander verbunden sind. Innerhalb des ersten Arbeitsraumes 4 ist ein gasgefüllter Hohlraum 8 angeordnet, der in axialer Richtung offen ist und mit der Atmosphäre in Verbindung steht und auf der dem ersten Arbeitsraum 4 zugewandten Seite von Dämpfungsflüssigkeit umspült ist. In dem hier dargestellten Ausführungsbeispiel ist die Trennwand 6 zur Isolierung akustisch störender, hochfrequenter Schwingungen mit kleinen Amplituden mit Spiel in einer Aufnahme 10 angeordnet, die einstückig mit dem Federelement 3 ausgebildet ist. Um eine möglichst einfache Montage zu gewährleisten, ist die Aufnahme 10 mit einer Verliersicherung 11 einstückig ausgebildet, hinter der die Trennwand 6 bei der Montage einschnappbar ist. Neben der hier dargestellten Anordnung der Trennwand 6 in der Aufnahme 10 besteht die Möglichkeit, daß an einem der beiden Teile Anschlagpuffer zur Vermeidung von Anschlaggeräuschen vorgesehen sind. Auch eine Einspannung der Trennwand 6 in der Aufnahme 10 ist möglich, wenn der Werkstoff der Trennwand eine den Erfordernissen angepaßte Nachgiebigkeit aufweist. Zur Unterstützung der Isolierung hochfrequenter Schwingungen in einem breitbandigen Frequenzbereich sind innerhalb des Federelementes 3 Ausnehmungen 12 vorgesehen, die ebenfalls wie der Hohlraum 8 gasgefüllt sind, mit der Atmosphäre verbunden sind, und eine minimale radiale Erstreckung 13 aüfweisen.

Die Montage des Gummilagers gestaltet sich besonders einfach, da drei der vier zur Anwendung gelangenden Teile als Einschubteil 15 vormontierbar sind und anschließend in axialer Richtung in das Außenrohr 2 eingeschoben werden. Das hier dargestellte Gummilager weist sehr gute Gebrauchseigenschaften während einer langen Gebrauchsdauer auf und ist außerordentlich einfach herstellbar.

In den Figuren 3 und 4 ist ein weiteres Ausführungsbeispiel des erfindungsgemäßen Gummilagers gezeigt, dessen Wirkungsweise im wesentlichen der Funktion des Ausführungsbeispiels aus den Figuren 1 und 2 entspricht. Im Gegensatz zu dem Ausführungsbeispiel aus der Figuren 1 und 2 besteht das hier gezeigte Lager aus nur drei Teilen. Das Innenrohr 1 ist in das gummielastische Federelement 3 einvulkanisiert und von diesem entlang seiner gesamten axialen Erstreckung im Bereich des Außenumfangs umgeben. Die Trennwand 6 ist einstückig mit dem Federelement 3 ausgebildet und trennt die beiden Arbeitskammern 4,5 voneinander, die über die Verbindungsöffnung 7 flüssigkeitsleitend miteinander verbunden sind. Im Hinblick auf eine gute Endlagendämpfung ist zwischen dem Außenrohr 2 und der dem Innenrohr 1 zugewandten Oberfläche des Anschlagpuffers 14 eine Ausnehmung vorgesehen, die flüssigkeitsleitend mit der Verbindungsöffnung 7 ausgeführt ist. Zusätzlich zu der Endlagendämpfung ist hierbei von Vorteil, daß sich durch die flüssigkeitsleitende Verbindung der Ausnehmung mit der Verbindungsöffnung 7 zwischen den Arbeitsräumen 4,5 ein zweites Dämpfungsmaximum ergibt. Der zweite Hohlraum 9 ist ebenso wie der erste Hohlraum 8 in Richtung der Atmosphäre offen. Die Beweglichkeit der Trennwand 6 ist abhängig von den betriebsbedingt eingeleiteten, hochfrequenten Schwingungen, die durch das erfindungsgemäße Gummilager isoliert werden sollen und daher auf die jeweiligen Gegebenheiten des Anwendungsfalles abzustimmen.

## Patentansprüche

1. Hydraulisch dämpfendes Gummilager, umfassend ein Innenrohr (1) und ein das Innenrohr (1) mit radialem Abstand umschließendes Außenrohr (2), die durch ein gummielastisches Federelement (3) verbunden sind, wobei zumindest zwei flüssigkeitsgefüllte Arbeitsräume (4, 5) durch eine schwingfähige Trennwand (6) voneinander getrennt und durch zumindest eine Verbindungsöffnung (7) miteinander verbunden sind, und wobei von den Arbeitsräumen (4, 5) zumindest ein luftgefüllter Hohlraum (8) abgetrennt ist, der von blähelastischen Wänden begrenzt ist, die in zumindest einem Teilbereich eine in Richtung der Atmosphäre offene Ausnehmung aufweisen, dadurch gekennzeichnet, daß der Hohlraum (8) vom ersten Arbeitsraum (4) umschlossen ist, wobei die Ausnehmung in axialer Richtung zur Atmosphäre offen ist.

2. Gummilager nach Anspruch 1, dadurch gekennzeichnet, daß das Federelement (3) als einstückiges Vulkanisationsteil ausgebildet ist, das das Innenrohr (1) umfangsseitig umschließt und mit dem Außenrohr (2) die Verbindungsöffnung (7) begrenzt.

3. Gummilager nach Anspruch 2, dadurch gekennzeichnet, daß das einstückige Vulkanisationsteil die Trennwand (6) und die blähe lastischen Wände umfaßt, die den Hohlraum (8) begrenzen.

4. Gummilager nach Anspruch 1, dadurch gekennzeichnet, daß das Federelement (3) eine einstückig angeformte Aufnahme (10) für eine einschiebbare Trennwand (6) aufweist und daß die Trennwand (6) durch eine einstückig mit der Aufnahme (10) verbundene Verliersicherung (11) positioniert ist.

5. Gummilager nach Anspruch 4, dadurch gekennzeichnet, daß die Trennwand (6) in die Verliersicherung (11) einschnappbar ist.

6. Gummilager nach Anspruch 4 bis 5, dadurch gekennzeichnet, daß die Aufnahme (10) die umfangsseitige Begrenzung der Trennwand (6) mit einem Abstand umschließt und daß die Aufnahme (10) und/oder die Trennwand (6) im Bereich ihrer Anschlagflächen mit Anschlagpuffern versehen sind.

7. Gummilager nach Anspruch 4 oder 5, dadurch gekennzeichnet, daß die Trennwand (6) in der Aufnahme (10) eingespannt ist und aus einem gummielastischem Werkstoff besteht.

8. Gummilager nach Anspruch 4 bis 6, dadurch gekennzeichnet, daß die Trennwand (6) aus einer zwischen zwei unnachgiebigen Lochscheiben angeordneten Membran aus gummielastischem Werkstoff besteht, die der Membran in Schwingungsrichtung mit Abstand benachbart zugeordnet sind.

9. Gummilager nach Anspruch 1 bis 8, dadurch gekennzeichnet, daß das Federelement (3) auf der dem angrenzenden zweiten Arbeitsraum (5) zugewandten Seite zumindest eine gasgefüllte Ausnehmung (12) aufweist.

10. Gummilager nach Anspruch 9, dadurch gekennzeichnet, daß sich die Ausnehmung (12) im wesentlichen parallel zur Oberfläche des Teilbereichs des Federelements (3) erstreckt, der das Innen- (1) und das Außenrohr (2) miteinander verbindet.

11. Gummilager nach Anspruch 1 bis 10 dadurch gekennzeichnet, daß das Innenrohr (1), das Federelement (3) und die Trennwand (6) ein vormontierbares Einschubteil (15) bilden, das in axialer Richtung in das Außenrohr (2) einführbar und in diesem festlegbar ist.

12. Gummilager nach Anspruch 1 bis 11, dadurch gekennzeichnet, daß die Trennwand (6) von ventilartigen Durchbrechungen durchdrungen ist.

## Claims

1. A hydraulically damping rubber bearing, comprising an inner tube (1) and an outer tube (2) enclosing the inner tube (1) at a radial distance, which tubes are connected by an elastomeric spring element (3), at least two liquid-filled working spaces (4, 5) being separated from one another by a vibratory partition (6) and being interconnected by at least one connecting opening (7), and there being separated off from the working spaces (4, 5) at least one air-filled cavity (8), which is limited by elastically inflatable walls having, in at least one part region, a recess which is open in the direction of the atmosphere, characterized in that the cavity (8) is enclosed by the first working space (4), the recess being open to the atmosphere in the axial direction.

2. A rubber bearing according to claim 1, characterized in that the spring element (3) is configured as a one-piece vulcanization part which encloses the inner tube (1) on the peripheral side and with the outer tube (2) delimits the connecting opening (7).

3. A rubber bearing according to claim 2, characterized in that the one-piece vulcanization part comprises the partition (6) and the elastically inflatable walls which delimit the cavity (8).

4. A rubber bearing according to claim 1, characterized in that the spring element (3) has a receiving fixture (10) for an insertable partition (6), which receiving fixture is moulded on in one piece, and in that the partition (6) is positioned by a loss-protection device (11) connected integrally to the receiving fixture (10).

5. A rubber bearing according to claim 4, characterized in that the partition (6) can be snap-locked into the loss-protection device (11).

6. A rubber bearing according to either of claims 4 and 5, characterized in that the receiving fixture (10) encloses at a distance the peripheral-side boundary of the partition (6), and in that the receiving fixture (10) and/or the partition (6) are provided with stop buffers in the region of their stop faces.

7. A rubber bearing according to claim 4 or 5, characterized in that the partition (6) is clamped in place in the receiving fixture (10) and consists of an elastomeric material.

8. A rubber bearing according to any of claims 4 to 6, characterized in that the partition (6) comprises a membrane, made from elastomeric material, disposed between two inflexible perforated discs, which are assigned to the membrane in the direction of vibration adjacently at a distance apart.

9. A rubber bearing according to any of claims 1 to 8, characterized in that the spring element (3) has, on the side facing the contiguous second working space (5), at least one gas-filled recess (12).

10. A rubber bearing according to claim 9, characterized in that the recess (12) extends essentially parallel to the surface of that part-region of the spring element (3) which interconnects the inner tube (1) and the outer tube (2).

11. A rubber bearing according to any of claims 1 to 10, characterized in that the inner tube (1), the spring element (3) and the partition (6) from a pre-mountable insertion part (15), which can be introduced in the axial direction into the outer tube (2) and can be secured in this.

12. A rubber bearing according to any of claim 1 to 11, characterized in that the partition (6) is penetrated by valve-like apertures.

## Revendications

1. Support élastique à amortissement hydraulique, comprenant un tube interne (1) et un tube externe (2) entourant le tube interne (1) à une distance radiale, qui sont reliés par un élément élastique (3) en caoutchouc, au moins deux chambres de travail (4, 5) remplies de liquide étant séparées l'une de l'autre par une cloison (6) susceptible de vibrer et étant reliées l'une à l'autre par au moins une ouverture de communication (7), et au moins un espace creux (8) rempli d'air étant séparé des chambres de travail (4, 5), lequel espace creux est limité par des parois élastiques expansables qui sont pourvues, au moins dans une partie, d'un évidement ouvert en direction de l'atmosphère, caractérisé en ce que l'espace creux (8) est entouré par la première chambre de travail (4), l'évidement étant ouvert dans la direction axiale, vers l'atmosphère.

2. Support élastique selon la revendication 1, caractérisé en ce que l'élément élastique (3) est formé en tant que pièce de vulcanisation faite d'un seul morceau, qui entoure le tube interne (1) sur sa circonférence et limite, avec le tube externe (2), l'ouverture de communication (7).

3. Support élastique selon la revendication 2, caractérisé en ce que la pièce de vulcanisation faite d'un seul morceau comprend la cloison (6) et les parois élastiques expansables qui limitent l'espace creux (8).

4. Support élastique selon la revendication 1, caractérisé en ce que l'élément élastique (3) comporte un réceptacle (10) solidaire avec ce dernier destiné à une cloison (6) pouvant y être insérée, et en ce que la cloison (6) est positionnée à l'aide d'un élément de sécurité (11) empêchant sa sortie solidaire au réceptacle (10).

5. Support élastique selon la revendication 4, caractérisé en ce que la cloison (6) peut être emboîtée dans l'élément de sécurité (11) empêchant sa sortie.

6. Support élastique selon l'une des revendications 4 à 5, caractérisé en ce que le réceptacle (10) entoure, à distance, la limite de la cloison (6) du côté de sa circonférence et en ce que le réceptacle (10) et/ou la cloison (6) sont pourvus, dans la région de leurs surfaces d'arrêt, de tampons de butée.

7. Support élastique selon la revendication 4 ou 5, caractérisé en ce que la cloison (6) est montée sous contrainte dans le réceptacle (10) et est faite dans une matière de gomme élastique.

8. Support élastique selon les revendications 4 à 6, caractérisé en ce que la cloison (6) est formée par une membrane faite dans une matière en gomme élastique située entre deux disques à trous inflexibles qui sont voisins de la membrane et situés à distance de celle-ci dans la direction des vibrations.

9. Support élastique selon les revendications 1 à 8, caractérisé en ce que l'élément élastique (3) est pourvu, sur le côté tourné vers la seconde chambre de travail (5) adjacente, d'au moins un évidement (12) rempli de gaz.

10. Support élastique selon la revendication 9, caractérisé en ce que l'évidement (12) s'étend de manière essentiellement parallèle à la surface de la partie de l'élément élastique (3) qui relie l'un à l'autre le tube interne (1) et le tube externe (2).

11. Support élastique selon les revendications 1 à 10, caractérisé en ce le tube interne (1), l'élément élastique (3) et la cloison (6) forment une pièce à insérer (15) pouvant faire l'objet d'un assemblage préalable, qui peut être introduite dans le tube externe (2) dans la direction axiale et peut être fixée dans celui-ci.

12. Support élastique selon les revendications 1 à 11, caractérisé en ce la cloison (6) est traversée par des découpures semblables à des valves.
